# EUROPEAN PATENT SPECIFICATION

(11) **EP 0 469 804 B1**
(45) Date of publication and mention of the grant of the patent: **04.06.1997**
(21) Application number: 91306882.1
(22) Date of filing: 26.07.1991
(51) Int. Cl.: H04N 1/21

(54) **Apparatus for recording and/or reproducing a video signal**
Videosignalaufzeichnungs- und/oder Wiedergabegerät
Appareil pour l'enregistrement et/ou la reproduction de signaux vidéo

(30) Priority: 30.07.1990 JP 202042/90; 30.07.1990 JP 202051/90
(43) Date of publication of application: 05.02.1992
(73) Proprietor: SONY CORPORATION, Tokyo 141 (JP)
(72) Inventor: Kobayashi, Hiroshi, c/o Patent Division, Shinagawa-ku, Tokyo 141 (JP)
(74) Representative: Turner, James Arthur

(56) References cited:
- EP-A- 0 202 009
- EP-A- 0 273 640
- EP-A- 0 287 376
- EP-A- 0 336 317
- US-A- 4 472 741
- US-A- 4 858 032
- US-A- 4 914 746
- PATENT ABSTRACTS OF JAPAN vol. 13, no. 53 (E-713)7 February 1989 & JP-A-63 245 078
- PATENT ABSTRACTS OF JAPAN vol. 11, no. 061 (E-483)25 February 1987 & JP-A-61 220 586

## Description

This invention relates to apparatus for recording and/or reproducing a video signal.

As a recording apparatus for recording a still image as an electrical video signal, a so-called electronic still camera has been developed to record a still image on a magnetic disc as an electrical video signal. Unlike a standard camera using a halide film, an electronic still can reproduce a picked-up still image immediately on a television receiver.

The still image picked-up by an electronic still camera is poor in resolution as compared with a still image picked-up by a film camera, and therefore an electronic still camera capable of picking-up a still image of high resolution is required. However, since the magnetic disk provided as a recording medium has restrictions on its size and so on, the resolution cannot be improved so long as a magnetic disc is utilized.

To overcome this problem, an electronic still camera utilizing a semiconductor memory as a recording medium has already been proposed, in which a video signal of a picked-up still image is converted into a digital signal and the resulting video signal is stored and recorded in the semiconductor memory, thereby obtaining a still image of high resolution. This type of electronic still camera needs a semiconductor memory of large storage capacity, and the recording medium is thus very expensive and suited only to professional use.

On the other hand, as a consumer video apparatus, a video tape recorder (VTR) is widely available, so it has been proposed that an image of high resolution be recorded by utilizing a VTR. In this case, however, it takes a long time to record and process a still image of high resolution and as a consequence, it is impossible to record a plurality of still images which are picked-up successively.

To solve this problem, we have previously proposed a recording and/or reproducing apparatus wherein a digital video signal of one field or one frame is recorded on a pulse code modulated (PCM) audio data recording portion in a data format of an 8-mm VTR (see EP-A-0 444 837, US-A-660,957 or the corresponding JP-A-2046816, see in this respect also US-A-4 858 032 which additionally discloses ID codes for detecting the beginning of an image. In that case, the digital video signal of one field or one frame is recorded in the PCM audio data recording portion of several tens to several hundreds of tracks, and so the still image of high resolution can be recorded efficiently.

The digital video signal forming one still image is recorded over a plurality of tracks as described above so that, when a video signal of another still image is to be recorded on the same tape, an end portion of the recorded video signal must be detected, and the video signal of the new still image must continue therefrom. If the video signal of the new still image is not recorded as described above, there is the risk that the previously-recorded signal is erased unintentionally.

However, if the end portion of the still image signal recorded over several hundreds of tracks is searched for in the normal playback mode, it takes a long time to detect the end portion.

Further previously proposed video recording techniques are disclosed in EP-A-202 009 (which describes a video still camera in which output pictures for display are held in an output buffer) and the abstract to JP-A-63 245 078 (which describes adding Frame numbers and still picture identification numbers to recorded video tracks).

According to the present invention there is provided a video signal recording apparatus in which a continuous video signal and still images of a digital video signal picked-up by image pick-up means are recorded on a record medium, the apparatus comprising:
a memory for storing said data corresponding to a plurality of still images of said digital video signal, wherein after still image data of said digital video signal derived from said image pick-up means at an arbitrary image shooting timing have been sequentially stored in said memory, said stored data are read out from said memory and sequentially recorded on said record medium;
means for recording an identifying signal indicative of an end portion on or near the end portion of a previous still image signal recording portion on said recording medium, wherein when a new, subsequent still image signal is recorded on said recording medium, said end portion is detected by said identifying signal and said new, subsequent still image signal is recorded on a recording portion following next to said end portion; and
means for recording track number data on each track.

Thus an embodiment of the invention can provide a video signal recording and/or reproducing apparatus in which an end portion of a recorded still image signal can be detected with ease.

The invention will now be described by way of example with reference to the accompanying drawings, throughout which like parts are referred to by like references, and in which:
Figures 1 and 2 are respective diagrams of track formats used to explain an 8-mm VRT standard;
Figure 3, formed of Figures 3A and 3B, is a schematic block diagram showing an arrangement of a video signal recording and/or reproducing apparatus according to a first embodiment of the present invention;
Figure 4 is a schematic diagram showing an example of a charge-coupled device (CCD) imager;
Figure 5 is a schematic diagram of recorded tracks;
Figure 6 is a schematic diagram used to explain a recording timing of the first embodiment;
Figure 7 Is a schematic diagram of recorded tracks according to a modified embodiment of the present invention; and
Figure 8 Is a schematic diagram of recorded tracks according to a second embodiment of the present invention.

The video signal recording and/or reproducing apparatus to be described is applied to a VRT which is in accordance with the standards of an 8-mm VRT, which standard will be described initially.

Signals are recorded and/or reproduced by a pair of rotary heads mounted on a rotary head drum at an angular spacing of 180 degrees, and a tape is wrapped around the circumferential surface of the rotary head drum over an angular range of 221 degrees. Over an interval of 180 degrees of the 221 degrees, the video signal is recorded and/or reproduced, and in the remaining interval of 36 degrees, a digitized (PCM) timebase-compressed audio signal is recorded and/or reproduced.

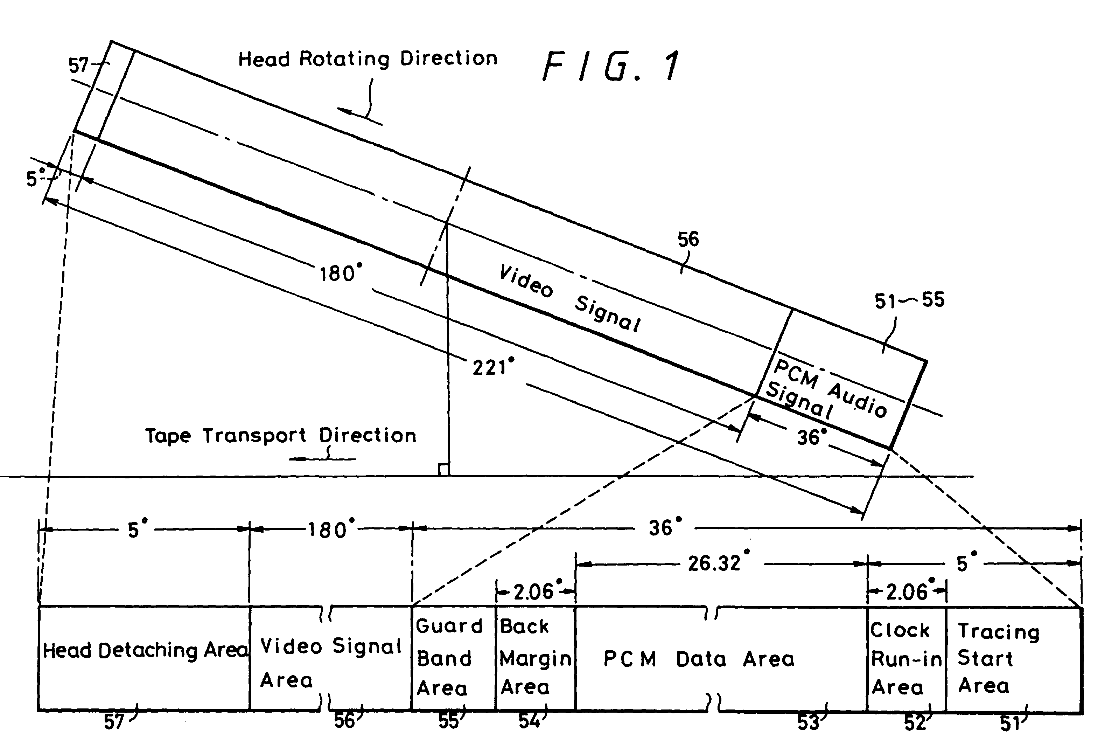

Figure 1 shows an example of a format of a recorded track formed on the tape according to this standard. The track format comprises at the head thereof a tracing start area 51 and a clock running area of rotational angle of 5 degrees from when the head starts tracing the tape, the clock run-in area 52 occupying 2.06 degrees following the tracing start area 51. The 2.06 degrees correspond to three horizontal periods (3H) of the video signal, and the clock runin area 52 is synchronized with PCM data which will be described later. The clock running area 52 is followed by a PCM data area 53 of a timebase-compressed audio signal of 26.32 degrees, followed by a back margin area 54 of 2.06 degrees (3H). The back margin area 54 is used to cope with the displacement of the recording position or the like in the so-called after-recording mode. The back margin area 54 is followed by a guard band area 55 of 2.62 degrees for a video signal area and the PCM data area. The guard band area 55 is followed by a video signal area 56 of one field of 180 degrees, followed by a head detaching area 57 of 5 degrees.

With this standard, the video signal of one field is recorded on and/or reproduced from the video signal area 56, while the PCM audio signal of 1/60 second is error-corrected, timebase-compressed to about 1/6.8 and recorded on and/or reproduced from the PCM data area 53. The recorded tracks are oblique formed in the longitudinal direction of the tape sequentially, whereby the consecutive video signal and audio signal are recorded and/or reproduced.

If the video signal portion of 180 degrees is divided equally by 5, then one divided video signal portion becomes 36 degrees. If 26.32 degrees of the PCM data portion 53, 5 degrees of the tracing start area 51, 2.06 degrees of the succeeding back margin area 54 and 2.62 degrees of the guard band area 55 are added, then the duration of the period becomes exactly 36 degrees. Accordingly, on the basis of the apparatus according to the above-mentioned standard, it is possible to construct an apparatus for recording and/or reproducing only the audio signal.

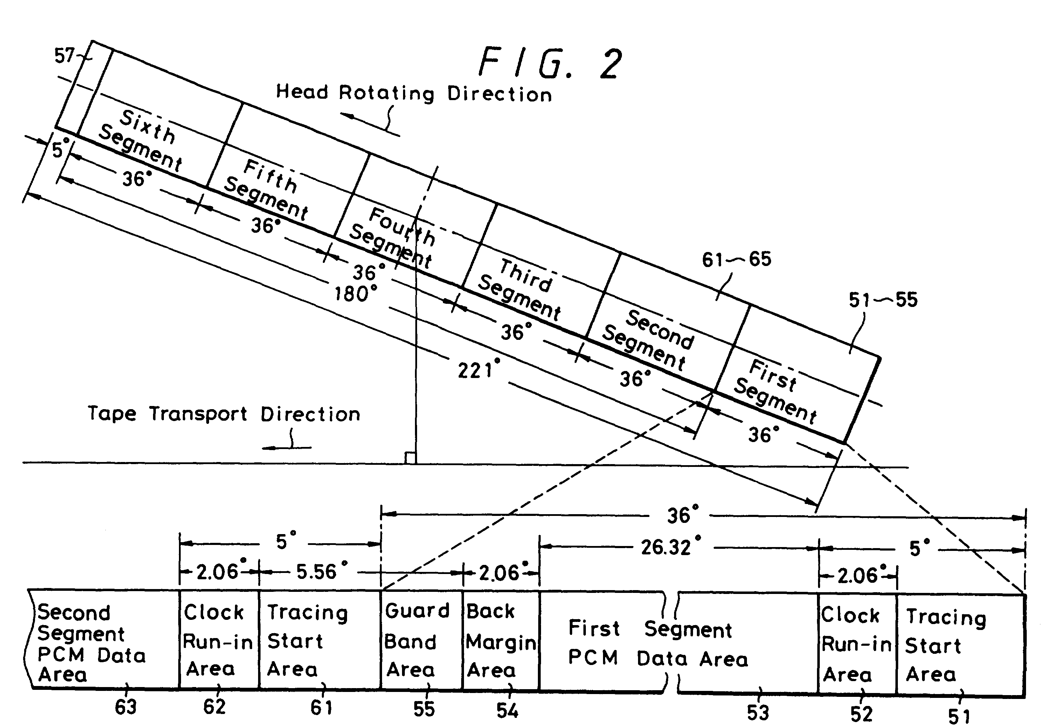

Figure 2 shows an example of a format of the recording track for such recording and/or reproducing apparatus.

As shown in Figure 2, the recording track format from the tracing start area 51 in which the head starts tracing the tape to the guard band area 55 is the same as that of the above-mentioned standard, and this interval is utilized as the first segment. Then, the starting end portion of the video signal portion 56 is followed by a tracing start area 61, a clock run-in area 62, a data area 63, a margin area 64 and a guard band area 65 of the same arrangement, and this interval is utilized as the second segment. Further, the same arrangement as that of the second segment is repeatedly provided at every 36 degrees of the video signal portion 56 and these areas are utilized as third to sixth segments. The sixth segment is followed by the head detaching area 57 of 5 degrees.

Thus, the first to sixth segments are provided. In these segments, the rotational angle position of the rotary head is detected and PCM data are output thereto and recorded during a time corresponding to a desired segment (interval) of 36 degrees from the head tracing start end side. Then, the reproduced signal is gated during the above time and reproduced, whereby the respective segments are recorded and/or reproduced independently. If the signal is recorded on a tape that has been used once (in the after-recording mode) and if a flying-erase head is driven only during the period in which the head is in contact with the tape in the desired segment interval, then that interval alone can be selected and erased for rerecording.

In this fashion, the PCM audio signal can be recorded and reproduced at every 6 intervals divided in the width direction of the tape, whereby the PCM audio signal can be recorded on and/or reproduced from a tape capable of recording of, for example, 4 hours 30 minutes giving a total time period of 27 hours, which in a duration 6 times as long as the recording time of the above-mentioned tape.

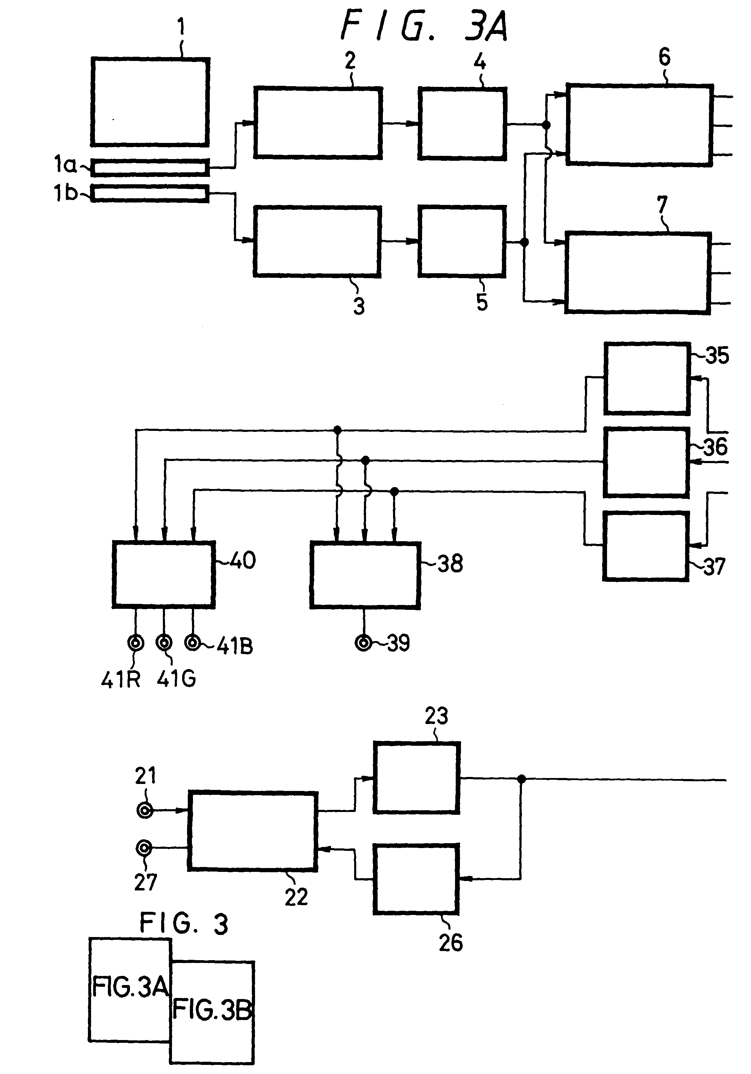

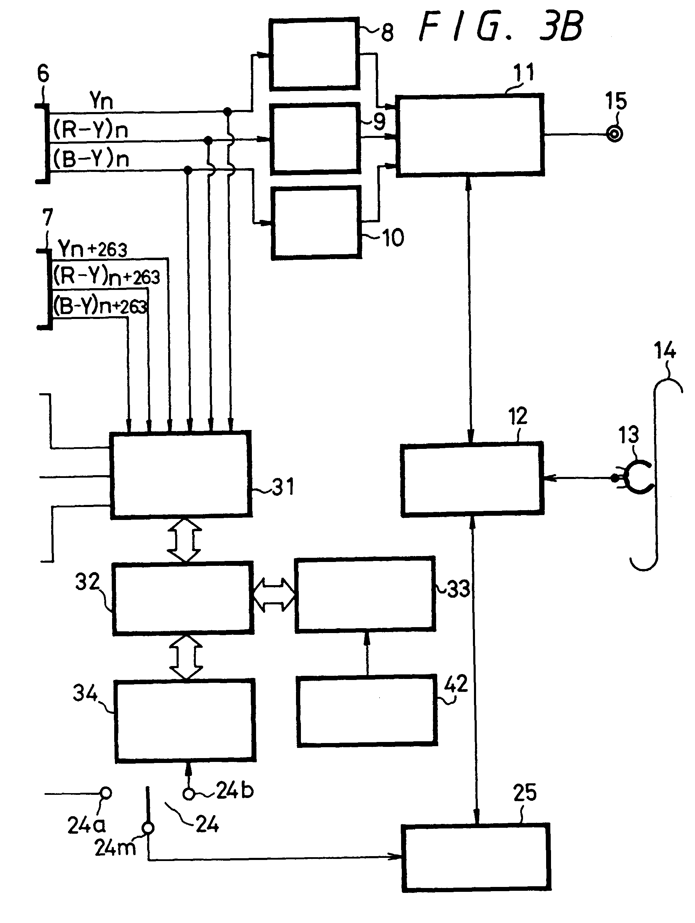

In the first embodiment, the invention is applied to a VRT whose standard conforms to the 8-mm VRT standards shown in Figures 1 and 2. Figure 3 shows in block form an example of such 8-mm VRT.

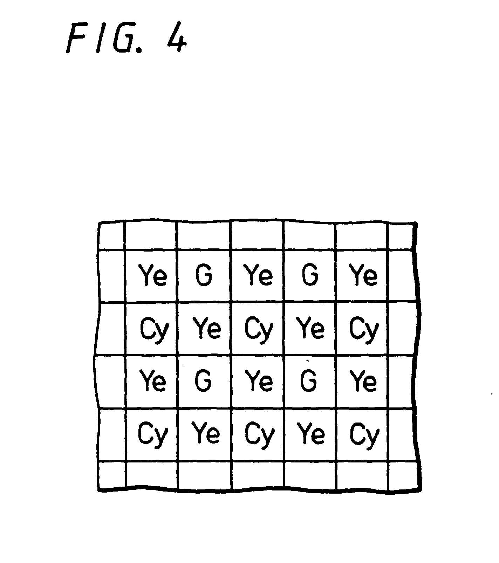

Referring to Figure 3, a CCD imager 1 is provided as a solid state image pick-up element, and the CCD imager 1 is of the so-called full-pixel read-out type in which an image signal of pixels of odd-numbered horizontal lines and an image signal of pixels of even-numbered horizontal lines can be read out independently (see JP-A-1188179). The CCD imager 1 includes a colour filter array composed of 494 (vertical direction) x 768 (horizontal direction) colour filters such as a yellow Ye, a green G, a cyan Cy or the like as, for example, shown in Figure 4. The respective colour filters are associated with light receiving elements disposed in front of the CCD imager 1, and signal charges based on the colour light passed through the respective colour filters are stored in the respective light receiving elements.

Referring back to Figure 3, the signal charges stored in the light receiving elements of the odd-numbered horizontal lines and the signal charges in the light receiving elements of the even-numbered lines are output to different shift registers 1a and 1b, and outputs of the shift registers 1a and 1b are supplied to output circuits 2 and 3, respectively. In the output circuits 2 and 3, these signals are sampled and held and video signals from the output circuits 2 and 3 are supplied to analogue-to-digital (A/D) converters 4 and 5, in which they are converted into digital video signals, respectively. The digital video signals from the A/D converters 4 and 5 are respectively supplied to video signal processing circuits 6 and 7 which respectively extract luminance component and colour difference component signals from the video signals supplied thereto. In this case, assuming that n is the number of horizontal lines of the video signal, then the video signal processing circuit 6 extracts a luminance signal component Yn and colour difference signals (R-Y)ₙ, (B-Y)ₙ and the video signal processing circuit 7 extracts a luminance component Yₙ₊₂₆₃ and colour difference signals (R-Y)ₙ₊₂₆₃ and (B-Y)ₙ₊₂₆₃, respectively. That is, the video signal processing circuits 6 and 7 simultaneously derive signals which are displaced by 263 horizontal lines which correspond to one field from a time standpoint. As a consequence, when the video signal processing circuit 6 derives the luminance component and the colour difference components of the video signal of each line of the odd-numbered field, the video signal processing circuit 7 derives the luminance component and the colour difference components of the video signal of each line of the evennumbered field. Conversely, when the video signal processing circuit 6 derives the luminance component and the colour difference components of the video signal of the even-numbered field, the video signal processing circuit 7 derives the luminance component and the colour difference components of the video signal of the odd-numbered field.

Then, the outputs Yₙ, (R-Y)ₙ and (B-Y)ₙ from the video signal processing circuit 6 are respectively supplied to digital-to analogue (D/A) converters 8, 9 and 10, in which they are converted to analogue signals and then fed to a video signal processing circuit 11. In the video signal processing circuit 11, the video signal supplied thereto as the luminance component and the colour difference components is converted into a video signal of the predetermined recording standard. This video signal is supplied through a radio frequency (RF) circuit 12 to a magnetic head 13 mounted on a rotary head drum, to be recorded on the video signal area 56 of the track formed on a video tape 14 according to the standard shown in Figure 1. In this case, the video signal of one field is recorded on one track.

Further, a video signal reproduced from the video tape 14 by the magnetic head 13 is supplied through the RF circuit 12 to the video signal processing circuit 11 and a reproduced video signal from the video signal processing circuit 11 is supplied to an output terminal 15.

In this embodiment, an audio signal picked-up by a microphone (not shown) is supplied through an input terminal 21 to a noise reduction circuit 22, in which it is reduced in noise. Then, the audio signal from the noise reduction circuit 22 is converted into a digital audio signal by an A/D converter 23. The digital audio signal from the A/D converter 23 is supplied to a first fixed contact 24a of a change-over switch 24. The change-over switch 24 connects its movable contact 24m to the first fixed contact 24a when the digital audio signal is recorded and/or reproduced. A signal developed at the movable contact 24m is supplied to a digital data processing circuit 25. This signal is then processed by the digital data processing circuit 25 in a predetermined processing fashion such as the addition of an error correcting code or the like and supplied through the RF circuit 12 to the magnetic head 13, thereby to be recorded on the PCM data area 53 of the standard shown in Figure 1 and which is formed on the video tape 14.

The digital audio signal reproduced from the video tape 14 by the magnetic head 13 is supplied through the RF circuit 12 to a digital data processing circuit 25. This reproduced digital audio signal is error-corrected by the digital data processing circuit 25 and supplied through the change-over switch 24 to a D/A converter 26. This digital audio signal is converted into an analogue audio signal by the D/A converter 26 and reduced in noise by the noise reduction circuit 22. The thus processed audio signal is supplied from an output terminal 27. Although not shown, the audio signal is frequency-multiplexed with an FM-modulated video signal and the digital audio signal is not always recorded, but is recorded if necessary in the optional mode.

In this embodiment, instead of the digital audio signal, a digital video signal of a still image can be recorded in the PCM data area 53 (see Figure 1) in which the digital audio signal is recorded. This kind of apparatus for recording a digital video signal has been previously proposed by us (see Japanese patent specification 2/46816).

Referring to Figure 3, when the video signal recording and/or reproducing apparatus is in the recording mode for a still image, the luminance components and the colour difference components (digital signals) of the video signals from the video signal processing circuits 6 and 7 are supplied to a bit reduction circuit 31, in which they are reduced in data redundancy by several tenths of the original and supplied to and written in a frame memory 32 at a predetermined write timing. In writing, the luminance component Y and the colour difference components (R-Y) and (B-Y) are written in the frame memory 32 independently. The frame memory 32 has a storage capacity for storing the video signal of 3 frames (corresponding to three still images) and the write and read thereof are controlled by a memory controller 33 so that, each time a still image recording switch 42 of the video camera is depressed, then the video signal of one frame is stored in the frame memory 32. Consequently, when the still image recording switch 42 is depressed successively, then the video signal provided by three depressions of the still image recording switch 42, the video signal of three frames can be stored in the frame memory 32 at maximum.

The video signals displaced by one field each are produced from the video signal processing circuits 6 and 7 so that, if the outputs of the two processing circuits 6 and 7 are added, then these video signals displaced by one field each are merged as the video signal of one frame and then written in the frame memory 32. Further, in the bit reduction circuit 31, only the data redundancy is reduced but the information amount of the video signal is not changed.

The video signal of one frame temporarily stored in the frame memory 32 is read out from the frame memory 32 at a relatively slow transmission rate conforming to the transmission rate of the above-mentioned audio signal, under the control of a memory controller 33, and then fed to a serial-to-parallel converting circuit 34, in which it is converted into serial data. These serial data are supplied to a second fixed contact 24b of the change-over switch 24. In this embodiment, the digital video signal of the still image up to 3 frames can be stored in the frame memory 32. When the video signal of 2 frames or 3 frames is stored in the frame memory 32, under the control of the memory controller 33, the video signals are read out from the frame memory 32 at the relatively slow transmission rate conforming to the transmission rate of the digital audio signal in the sequential order of the old video signal.

While the video signal is read out from the frame memory 32, the movable contact 24m of the change-over switch 24 is connected to the second fixed contact 24b and the serial data from the serial-to-parallel converting circuit 34 are supplied to the digital data processing circuit 25. In the digital data processing circuit 25, these serial data are added to the error-correcting code or the like similarly to the recording mode of the digital audio signal, and then fed through the RF circuit 12 to the magnetic head 13, whereby the video signal of one frame is recorded on the video tape 14 at its PCM data area 53 according to the standard shown in Figure 1 as the still image signal.

In this case, since the PCM data area 53 of one track has a small capacity to recording signals, the video signal of one field is recorded on a plurality of tracks. For example, let it be assumed that the digital audio signal is recorded on the PCM data area 53 of one track at a transmission rate of 500 kBPS (500 kbits per second) and also that the video signal of one frame produced from the video signal processing circuits 6 and 7 is 7.6 Mbits including the luminance component and the colour difference components. Then, when the bit rate is compressed to 1/4 by the bit reduction circuit 31, the frame memory 32 stores 1.9 Mbits as the video signal of one frame. If the signal of 1.9 Mbits is recorded at the transmission rate of 500 kBPS, then 1900/500 = 3.8 and therefore the video signal of one frame is recorded on the PCM data area 53 per 3.8 seconds. The duration of time of 3.8 seconds corresponds to 228 tracks.

Further, in this embodiment, the frame memory 32 can store the video signal of 3 frames. Thus, when the video signal of, for example, 3 frames is successively recorded in the frame memory 32, then 3.8 x 3 = 11.4 is satisfied, so that the video signal is read out from this frame memory 32 during the period of 11.4 seconds.

When the video signal of one frame recorded in the PCM data area 53 of each track as the still image signal is reproduced, then the digital video signal reproduced from the video tape 14 by the magnetic head 13 is supplied through the RF circuit 12 to the digital data processing circuit 25. The digital video signal, error-corrected by the digital data processing circuit 25, is then supplied through the change-over switch 24 to the serial-to-parallel converting circuit 34. Then, the reproduced data are converted into parallel data by this serial-to-parallel converting circuit 34 and parallel data are written in the frame memory 32 under the control of the memory controller 33.

At that time, the video signal of one frame is reproduced from the video tape 14 during the same duration of time (that is, 3.8 seconds) as that required in the recording mode.

When the video signal of one frame is written in the frame memory 32, then the video signal is read out to the bit reduction circuit 31 from the frame memory 32 under the control of the memory controller 33, and then reconverted into the digital signal of the original redundancy by the bit reduction circuit 31. At that time, the video signals of 2 fields forming the video signal of one frame are alternately read out from the frame memory 32 in a real time fashion, that is, the video signal of one frame is repeatedly read out from the frame memory 32 at the cycle of one-thirtieth of a second. Then, the luminance signal Y and the colour difference signals (R-Y) and (B-Y) of the reconverted video signal are respectively supplied to D/A converters 35, 36 and 37 and converted into an analogue luminance signal and colour difference signals. The analogue luminance signal and colour difference signals are supplied to an encoder 38, in which they are converted into a composite video signal, and this composite video signal is supplied through an output terminal 39 to a monitor receiver (not shown) or the like. Also, the analogue luminance signals and analogue colour difference signals from the D/A converters 35, 36 and 37 are supplied to a matrix circuit 40, in which they are converted into three primary signals R, G and B. These primary colour signals R, G and B are supplied through output terminals 41R, 41G and 41B to the monitor receiver (not shown) or the like.

Since the VRT of this embodiment is arranged as described above, the still image of the digitized signal of high resolution can be recorded. That is, when the apparatus of this embodiment is in the recording mode on the PCM data area 53 of each track but instead, the video signal of one frame digitized at an arbitrary timing can be recorded. In that case, if the video camera, for example, is provided with the still image recording switch 42, and if this still image recording switch 42 is depressed while the continuous analogue video signal is being recorded on the video signal area 56 of each track, then the video signal provided at the instant the switch 42 is depressed is also recorded as the digital signal.

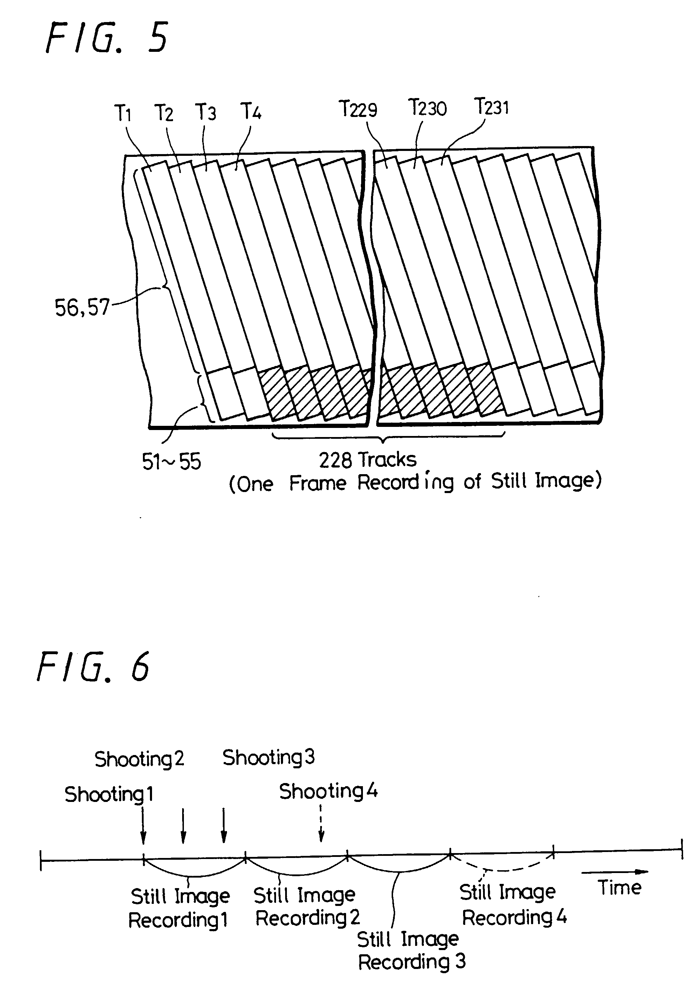

Let is now be assumed that, as for example, shown in Figure 5, respective tracks T₁, T₂, T₃, ..., are sequentially formed on the video tape in the recording of the normal analogue video signal and that the still image recording switch 42 is operated at the timing in which the recording is performed on the track T₃. Then, the recording of the same digital video signal as the analogue video signal recorded on the video signal area 56 of the track T₃ is started in the PCM data portion 53. It is to be appreciated that the digital signal is recorded with a delay time of several tracks due to the processing speed of the circuit. In this case, the video signal of one frame is recorded on the PCM data area 53 over 228 tracks up to the track T₂₃₀ as shown by the hatched portion in Figure 5, and the recording of the still image digitized again at an arbitrary timing after the next track T₂₃₁ becomes possible.

In this embodiment, since the video signal of three frames can be stored in the frame memory 32, the successively-digitized still images can be recorded on 684 tracks (228 tracks x 3) when the still image is successively picked up 3 times. That is, as shown in Figure 6, assuming that the still image recording switch 42 is depressed at a certain timing to perform the still image shooting 1, then the video signal derived from the CCD imager 1 is written in the frame memory 32 and the recording over 228 tracks on the PCM data 53 of the video tape 14 is started (still image recording 1). If the still image recording switch 42 is depressed twice to perform the still image shootings 2 and 3 before the recording over 228 tracks on the PCM data area 53 is ended, then the video signal derived from the CCD imager 1 is written in the frame memory 32. Then, when the still image recording 1 is ended, the video signal written in the frame memory 32 by the shooting 2 is read out therefrom and recorded in the video tape 14 (still image recording 2). Further, when this still image recording 2 is finished, then the video signal written in the frame memory 32 by the shooting 3 is read out therefrom and recorded on the video tape 14 (still image recording 3).

In this case, at the timing point in which the recording of the respective video signals on the video tape 14 is finished and the frame memory 32 becomes empty, the next still image can be picked up. For example, when the still image recording switch 42 is depressed during the still image recording 2 is carried out (the shooting 4 in Figure 6), the resulting video signal is written in the frame memory 32 at its address utilized in the shooting 1 and then recorded on the video tape 14 after the still image recording 3 is finished (still image recording 4).

Since the still image thus recorded is the digitized video signal of one frame, the output of the CCD imager 1 is recorded without being deteriorated substantially so that a still image of high resolution can be recorded. If the reproduced signal of this still image is supplied to a video printer, then a hard copy of the still image of high resolution can be obtained. In this case, since the digital video signal is recorded by effectively utilizing the arrangement in which the PCM audio signal of the video camera according to the 8-mm VRT standard is recorded, the digital video signal can be recorded by adding a few circuits such as the frame memory or the like and therefore the recording and/or reproducing apparatus can be simplified in arrangement. Further, since the sub area of the video tape 14 which is not utilized for recording the video signal as it is designed is utilized, the efficient recording can be effected.

In this embodiment, since the field memory 32 for the still image recording is arranged so as to store the video signal of three frames, the video signal, which results from successively shooting the three still images, can be recorded and the still image can be continuously picked up similarly to the standard still camera.

When the still image recording switch 42 is successively depressed 3 times in a very short period of time, all still images cannot be recorded because the video signals to be stored exceeds the storage capacity of the frame memory 32, which fact may be displayed in the viewfinder or the like.

Further, since the digital video signal is compressed in redundancy by the bit reduction circuit 31 and then recorded on the video tape 14, the data amount of one field is small and the still image can be efficiently recorded in a relatively short period of time. Alternatively, the above bit reduction may be performed by the frame memory 32.

While the analogue video signal is continuously recorded as the real moving picture and the digital video signal is also recorded as the still image as described above, a dummy video signal (a signal having no video information and which is composed only of a synchronizing signal) is recorded on the video signal area 56 of the video tape 14, and the digital video signal only is also recorded thereon as the still image.

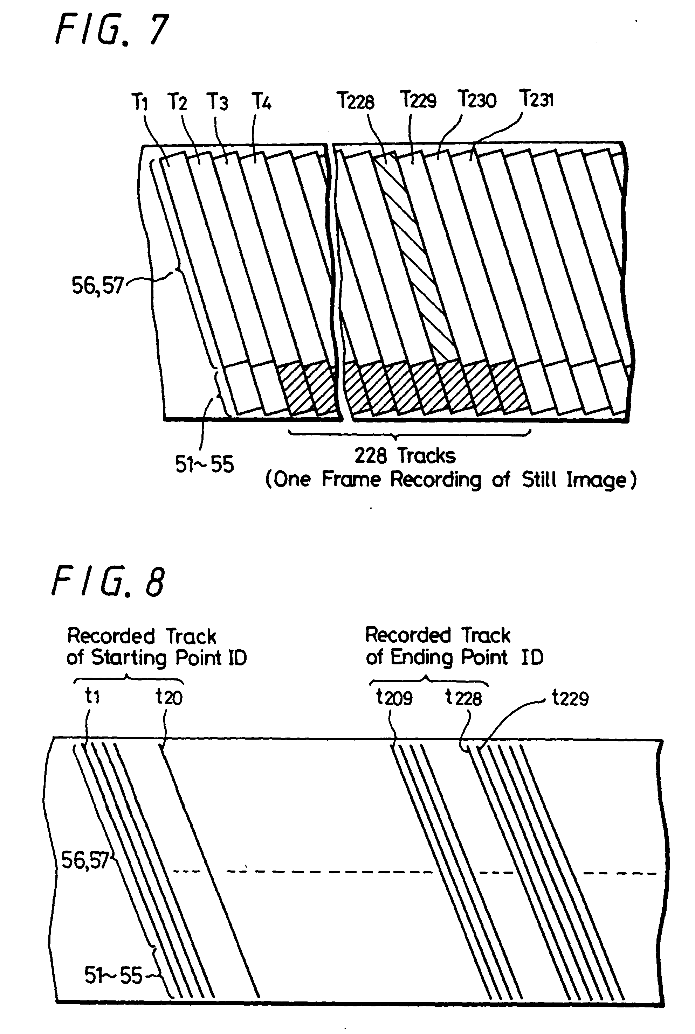

In this case, if continuous shooting exceeding the storage capacity of the field memory 32 is performed, then the analogue video signal may be recorded on the video signal area 56. More specifically, if the still image recording switch 42 is continuously depressed four times within, for example, 3.8 seconds, then the video signal is recorded on the field memory 32 at every frame at the timing in which the still image recording switch 42 is depressed three times and then sequentially recorded on the PCM data area 53. However, at the timing in which the still image recording switch 42 is depressed last, at the fourth time, the field memory 32 is fully occupied in storage capacity but instead, if the analogue video signal of one field or one frame is written in the video signal area 56 by utilizing a recording system circuit of the standard real moving picture, then the still image can be recorded although the resolution is deteriorated. For example, when the digital video signal is recorded on the PCM data area 53 of the tracks T₃ to T₂₃₀ under the condition that the field memory 32 is fully occupied in storage capacity as, for example, shown in Figure 7 and when the still image recording switch 42 is depressed just before the digital video signal is recorded on the track T₂₂₈, then only one field of the analogue video signal that is now picked-up is recorded on the video signal area 56 of the track T₂₂₈. At that time, special identifying (ID) data are recorded on the PCM data area 53 of the track T₂₂₈ so that the still image based on this analogue recording can be searched for with ease.

Alternatively, by utilizing the multi-segment PCM standard of the 8-mm VRT shown in Figure 2, only the digital video signal as the still image can be recorded. In this case, the ist to 6th segments are utilized as separate channels in which the still images are recorded independently, and alternatively, the digital video signal of one frame may be recorded in a shorter period of time by sequentially utilizing the 1st to 6th segments.

Since the CCD imager 1 which can derive the video signal of full pixels of one frame during one field portion is utilized as the image pick-up means of the video camera in the above embodiment, the video signal of one frame in the above embodiment, the video signal of one frame can be obtained with ease and the video signal of one frame is digitized and then recorded. If the image pick-up means which can derive only the imager signal of one field is utilized, only the video signal of one field may be recorded as the still image signal. In this case, since the memory 32 has a storage capacity of 3 frames (6 fields), 6 still images can be recorded and the continuous still image shooting up to 6 still images can still be effected.

In the case of this field recording, the vertical resolution of the recorded video signal is lowered to a half of that of the frame recording.

While the memory which can store video signals of 3 frames is utilized as the memory 32 for the still image recording, continuous shooting can be effected if the memory has a storage capacity of at least 2 still pictures. A memory of storage capacity of more than 3 frames can be utilized.

Further, while the video signal picked-up by the video camera is recorded as a digital video signal, a variant is also possible that a video signal of one frame or one field supplied from other video apparatus such a VRT can be recorded.

With the above embodiment of the invention, the video signal as the still image is simultaneously recorded with the video signal as the real moving picture and the still image can be recorded efficiently by a simplified arrangement. In this case, the still images successively picked-up can be recorded and the still images can be picked-up successively at an arbitrary timing.

Another embodiment of the present invention will be described below and in this case, it is assumed that the video signal of one frame is recorded over 228 tracks.

In this embodiment, of the 228 tracks forming the video signal of one frame, an ID signal (hereinafter referred to as a start point ID) indicative of the start point is recorded on the initial 20 tracks and an ID signal (hereinafter referred to as an end point ID) indicative of the end point is recorded on the last 20 tracks.

More specifically, as shown in Figure 8, if the video signal of one frame is recorded on the PCM data area 53 in a range of from the track t₁ to the track t₂₂₈, the start point ID is recorded on the first 20 tracks ranging from tracks t₁ to t₂₀ and the end point ID is recorded on the last 20 tracks from tracks t₂₀₉ to t₂₂₈.

The reason that the start point ID and the end point ID are recorded on the 20 tracks each is to detect these IDs in the high speed search mode (fast forward mode with tape speed 20 times as high as the normal tape speed and the search in the rewind mode).

Also, in this embodiment, track number data are sequentially added to video data recorded on the respective tracks t₁ to t₂₂₈ as sub codes and the track number data are recorded together with the digital video signal.

If a digital video signal of a new still image is recorded on the video tape in which the digital video signal of one frame is already recorded on the PCM data area 53 of tracks t₁ to t₂₂₈, then the video signal of one frame picked-up by the CCD imager 1 is temporarily stored in the frame memory 32, and then the end point ID recorded together with the digital video signal on the tracks t₂₀₉ to t₂₂₈ is searched for in the high speed search.

In this case, if the track scanned, for example, by the magnetic head in the camera mode is the track (any one of the tracks t₁ to t₂₂₈) in which the data are already recorded on its PCM data area 53, the end point ID is searched for by the fast forward search. If the above track scanned is the track (the track after the track t₂₂₉) in which data are not recorded on the PCM data area 53, the end point ID is searched for by the rewind search.

On the basis of the detection of this end point ID, the track t₂₂₉ next to the last still image recording track t₂₂₈ is scanned by the magnetic head thereby to record a video signal of one new frame stored in the frame memory 32 over 228 tracks from the above track t₂₂₉.

Further, ID signals such as the start point ID, the end point ID or the like and the sub code information such as the track number data or the like involved in the reproduced data are supplied from the serial-to-parallel converting circuit 34 to the memory controller 33 side, whereby various controls such as the control of the reproducing track or the like can be performed by the memory controller 33 on the basis of the sub code information.

In this embodiment, the end point ID is recorded on the last 20 tracks from t₂₁₁ to t₂₂₀ as described above so that, when only the still image is recorded, the starting track t₂₃₁ of the recorded track in which the still image is not recorded can be searched for with ease. Thus, by recording the next still image from the above track t₂₃₁, the digital video signal of the still image can be successively recorded on the tracks formed on the video tape efficiently.

In accordance with this embodiment, since the non-recorded track can be detected with ease by utilizing the end point ID, the digital video signal of the still image can be successively recorded effectively. Thus, efficient recording is made from this standpoint. Also, a new digital video signal can be prevented from being unintentionally recorded on the track in which the digital video signal of the still image is already recorded, thus avoiding miserasure. Further, since the still images are successively recorded as described above, upon reproduction, the recorded still images can be successively searched for by reproducing the tape from the tape start end, thus making it possible efficiently to reproduce the still images.

Further, while the last track is judged on the basis of the end point ID as described above in the second embodiment, the last track may be judged by detecting the track number data recorded on each track together with the digital video signal of the still image. In the high speed search mode, the last track can be detected easily by the ID signal rather than the track number data.

According to the second embodiment of the present invention, the video signal as the still image can be simultaneously recorded with the video signal provided as the real moving picture and the end portion (or the next non-recorded portion) for the still image data can be detected with ease in the search mode or the like. Thus, the still image signal can be effectively recorded on the record medium and therefore the recording of the still image can be efficiently made by the simple arrangement.

## Claims

1. A video signal recording apparatus in which a continuous video signal and still images of a digital video signal picked-up by image pick-up means (1) are recorded on a record medium (14), the apparatus comprising:
a memory (32) for storing said data corresponding to a plurality of still images of said digital video signal, wherein after still image data of said digital video signal derived from said image pick-up means (1) at an arbitrary image shooting timing have been sequentially stored in said memory (32), said stored data are read out from said memory (32) and sequentially recorded on said record medium (14);
means for recording an identifying signal indicative of an end portion on or near the end portion of a previous still image signal recording portion on said recording medium, wherein when a new, subsequent still image signal is recorded on said recording medium, said end portion is detected by said identifying signal and said new, subsequent still image signal is recorded on a recording portion following next to said end portion; and
means for recording track number data on each track.

2. Apparatus according to claim 1 further comprising a still image recording switch (42) which enables a continuous analogue video signal to be recorded as a digital video signal when operated.

3. Apparatus according to claim 1 wherein said image pick-up means (1) is a charge coupled device of a full-pixel read-out type.

4. Apparatus according to claim 1 wherein said memory (32) is a frame memory (32) which can store a video signal of three frames.

5. Apparatus according to any one of the preceding claims, wherein said still image data of one frame are recorded on 228 tracks.

6. Apparatus according to claim 5 wherein said identifying signal is recorded in the last 20 tracks of 228 tracks forming a video signal of one frame.

7. Apparatus according to any one of the preceding claims further comprising bit reduction means (31) for reducing a redundancy of a digital video signal to be stored in said memory (32).

8. Apparatus according to any one of the preceding claims wherein said recording apparatus utilizes a signal format of an 8-mm video tape recorder.

## Revendications

1. Un appareil d'enregistrement de signal vidéo dans lequel un signal vidéo continu et des images fixes d'un signal vidéo numérique capté par des moyens de prise de vue (1) sont enregistrés sur un support d'enregistrement (14), l'appareil comprenant :
une mémoire (32) pour enregistrer des données correspondant à un ensemble d'images fixes du signal vidéo numérique, de façon qu'après que des données d'image fixe du signal vidéo numérique qui est obtenu à partir des moyens de prise de vue (1) à un instant d'opération de photographie arbitraire, ont été enregistrées séquentiellement dans cette mémoire (32), les données enregistrées soient lues dans la mémoire (32), et enregistrées séquentiellement sur le support d'enregistrement (14);
des moyens pour enregistrer un signal d'identification indiquant une partie finale ou le voisinage de la partie finale d'une partie d'enregistrement de signal d'image fixe précédent sur le support d'enregistrement, de façon que lorsqu'un nouveau signal d'image fixe suivant est enregistré sur le support d'enregistrement, cette partie finale soit détectée par le signal d'identification et le nouveau signal d'image fixe suivant soit enregistré sur une partie d'enregistrement qui suit immédiatement la partie finale précitée; et
des moyens pour enregistrer des données de numéro de piste sur chaque piste.

2. Appareil selon la revendication 1, comprenant en outre un interrupteur d'enregistrement d'image fixe (42) qui permet d'enregistrer un signal vidéo analogique continu sous la forme d'un signal vidéo numérique, lorsque cet interrupteur est actionné.

3. Appareil selon la revendication 1, dans lequel les moyens de prise de vue (1) consistent en un dispositif à couplage de charge d'un type à lecture de la totalité des pixels.

4. Appareil selon la revendication 1, dans lequel la mémoire (32) est une mémoire d'intervalle d'image (32) qui peut enregistrer un signal vidéo correspondant à trois intervalles d'image.

5. Appareil selon l'une quelconque des revendications précédentes, dans lequel les données d'image fixe d'un intervalle d'image sont enregistrées sur 228 pistes.

6. Appareil selon la revendication 5, dans lequel le signal d'identification est enregistré dans les 20 dernières pistes parmi 228 pistes formant un signal vidéo d'un intervalle d'image.

7. Appareil selon l'une quelconque des revendications précédentes, comprenant en outre des moyens de réduction de nombre de bits (31) pour réduire la redondance d'un signal vidéo numérique devant être enregistré dans la mémoire (32).

8. Appareil selon l'une quelconque des revendications précédentes, dans lequel l'appareil d'enregistrement utilise un format de signal d'un magnétoscope 8 mm.

## Patentansprüche

1. Videosignalaufzeichnungsgerät, in welchem ein fortlaufendes Videosignal und Einzelbilder eines digitalen Videosignals, die durch eine Bildabtasteinrichtung (1) abgetastet werden, auf einem Aufzeichnungsträger (14) aufgezeichnet werden, wobei das Gerät aufweist:
einen Speicher (32) zum Speichern der Daten, die mehreren Einzelbildern des digitalen Videosignals entsprechen, wobei, nachdem Einzelbilddaten des digitalen Videosignals, das von der Bildabtasteinrichtung (1) in einem willkürlichen Bildaufnahme-Zeitpunkt hergeleitet wurde, nacheinander im Speicher (32) gespeichert wurden, die gespeicherten Daten aus dem Speicher (32) gelesen und nacheinander auf dem Aufzeichnungsträger (14) aufgezeichnet werden;
eine Einrichtung zum Aufzeichnen eines Identifikationssignals, welches einen Endbereich auf oder in der Nähe des Endbereichs eines vorherigen Einzelbild-Signalaufzeichnungsbereichs auf dem Aufzeichnungsträger anzeigt, wobei, wenn ein neues nachfolgendes Einzelbildsignal auf dem Aufzeichnungsträger aufgezeichnet wird, dieser Endbereich durch das Identifikationssignal ermittelt wird und das neue Einzelbildsignal auf einem Aufzeichnungsbereich aufgezeichnet wird, der auf diesen Endbereich folgt; und
eine Einrichtung zum Aufzeichnen von Spurnummerdaten auf jeder Spur.

2. Gerät nach Anspruch 1, das außerdem einen Einzelbildaufzeichnungsschalter (42) aufweist, der es ermöglicht, daß ein fortlaufendes analoges Videosignal als ein digitales Videosignal aufgezeichnet wird, wenn dieser betätigt wird.

3. Gerät nach Anspruch 1, wobei die Bildabtasteinrichtung (1) eine ladungsgekoppelte Voll-Pixel-Leseeinrichtung ist.

4. Gerät nach Anspruch 1, wobei der Speicher (32) ein Vollbildspeicher (32) ist, der ein Videosignal von drei Vollbildern speichern kann.

5. Gerät nach einem der vorhergehenden Ansprüche, wobei die Einzelbilddaten eines Vollbilds auf 228 Spuren gespeichert sind.

6. Gerät nach Anspruch 5, wobei das Identifikationssignal auf den letzten 20 Spuren der 228 Spuren, die ein Videosignal eines Vollbilds bilden, aufgezeichnet ist.

7. Gerät nach einem der vorhergehenden Ansprüche, das außerdem eine Bitreduziereinrichtung (31) zur Reduzierung einer Redundanz eines digitalen Videosignals, welches im Speicher (32) gespeichert werden soll, aufweist.

8. Gerät nach einem der vorhergehenden Ansprüche, wobei das Aufzeichnungsgerät ein Signalformat eines 8-mm-Videobandrekorders verwendet.
